(19) Europäisches Patentamt / European Patent Office / Office européen des brevets

(11) **EP 3 562 648 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **17821927.5**

(22) Anmeldetag: **22.12.2017**

(51) Int Cl.:
*B29C 64/106* (2017.01)    *B29C 64/153* (2017.01)
*B29K 69/00* (2006.01)    *B29K 75/00* (2006.01)
*B33Y 80/00* (2015.01)    *B33Y 70/00* (2020.01)
*B33Y 10/00* (2015.01)

(86) Internationale Anmeldenummer:
**PCT/EP2017/084287**

(87) Internationale Veröffentlichungsnummer:
**WO 2018/122143 (05.07.2018 Gazette 2018/27)**

(54) **LAGENWEISES FERTIGUNGSVERFAHREN FÜR EINEN GEGENSTAND MIT UNTERSCHIEDLICHEM LAGENMATERIAL**

LAYER-BASED PRODUCTION METHOD FOR AN OBJECT WITH DIFFERENT LAYER MATERIAL

PROCÉDÉ DE FABRICATION ADDITIVE D'UN OBJET COMPRENANT UN MATÉRIAU STRATIFIÉ AVEC DES COUCHES DIFFÉRENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2016 EP 16207131**

(43) Veröffentlichungstag der Anmeldung:
**06.11.2019 Patentblatt 2019/45**

(73) Patentinhaber: **Covestro Deutschland AG 51373 Leverkusen (DE)**

(72) Erfinder:
• **ACHTEN, Dirk 51375 Leverkusen (DE)**
• **BÜSGEN, Thomas 51377 Leverkusen (DE)**
• **REICHERT, Peter 41541 Dormagen (DE)**
• **DEGIORGIO, Nicolas 47807 Krefeld (DE)**
• **WEHRMANN, Rolf 47800 Krefeld (DE)**
• **HEUER, Helmut, Werner 57074 Siegen (DE)**
• **WENZ, Eckhard 50937 Köln (DE)**

(74) Vertreter: **Levpat c/o Covestro AG Gebäude 4825 51365 Leverkusen (DE)**

(56) Entgegenhaltungen:
WO-A1-2015/065826    WO-A1-2015/102774

EP 3 562 648 B1

**Beschreibung**

Die vorliegende Erfindung betrifft ein Verfahren zur Herstellung eines Gegenstandes in einem additiven Fertigungsverfahren mit Lagen aus unterschiedlichen Materialien, umfassend die Schritte:

I) Bereitstellen eines zumindest teilweise auf eine Temperatur oberhalb seiner Glasübergangstemperatur erwärmten Aufbaumaterials auf einem Träger, so dass eine Lage des Aufbaumaterials erhalten wird, welche einem ersten ausgewählten Querschnitt des Gegenstands entspricht;

II) Bereitstellen eines zumindest teilweise auf eine Temperatur oberhalb seiner Glasübergangstemperatur erwärmten Aufbaumaterials auf einer zuvor bereitgestellten Lage des Aufbaumaterials, so dass eine weitere Lage des Aufbaumaterials erhalten wird, welche einem weiteren ausgewählten Querschnitt des Gegenstands entspricht und welche mit der zuvor bereitgestellten Lage verbunden ist;

III) Wiederholen des Schritts II), bis der Gegenstand gebildet ist.

Der Einsatz von Polycarbonaten in additiven Fertigungsverfahren ("3D-Druckverfahren") ist grundsätzlich bekannt. So offenbart WO 2015/077053 A1 einen Gegenstand mit verringerter Dichte umfassend eine thermoplastische Polycarbonat-Zusammensetzung. Der Gegenstand weist eine Dichte (ASTM D792-00) von 80% bis 99%, bezogen auf das Gewicht eines ähnlichen massiven Spritzgusskörpers ohne Hohlräume auf. Weiterhin weist der Gegenstand eine Mikrostruktur, bestimmt durch optische Mikroskopie, mit 1 Volumen-% bis 20 Volumen-% an Hohlräumen auf, wobei wenigstens 80% der Hohlräume solche mit einem großen Verhältnis von Länge zu Breite sind und weniger als 20% der Hohlräume kugelförmige Hohlräume mit einem Durchmesser zwischen 10 und 100 Mikrometern sind. Die thermoplastische Polycarbonat-Zusammensetzung umfasst wenigstens 50 mol-% Bisphenol A und weist ein gewichtsmittleres Molekulargewicht ($M_w$) von 10000 bis 50000, eine Glasübergangstemperatur Tg von 130 °C bis 180 °C, einen Gehalt an phenolischen OH-Gruppen von weniger als 50 ppm, einen Halogengruppengehalt von unter 100 ppm und einen Diarylcarbonat-Gehalt von weniger als 1 Gewichts-% auf. Der Gegenstand wird mittels einer Monofilament-basierten additiven Herstellungstechnik gefertigt.

WO 2015/195527 A1 betrifft ein Verfahren zur Herstellung eines thermoplastischen Gegenstands, in dem eine Mehrzahl von Schichten eines thermoplastischen Materials in einem vorbestimmten Muster abgelegt wird, um den Artikel zu bilden. Das thermoplastische Material umfasst eine thermoplastische Zusammensetzung mit einem Schmelzflussindex von 30 Gramm/10 Minuten bis 75 Gramm/10 Minuten gemäß ASTM D1238-04 bei entweder 230 °C und 3,8 kg oder bei 300 °C und 1,2 kg. Das thermoplastische Material kann ein Polycarbonat-Homopolymer, ein Polycarbonat-Copolymer, ein Polyester oder deren Kombination sein. WO 2015/102774 A1 offenbart ebenso den Einsatz von Polycarbonaten in additiven Fertigungsverfahren.

Polycarbonate haben einen geringen Kristallinitätsgrad, eine vergleichsweise hohe Schmelztemperatur und eine deutlich über Raumtemperatur liegende Glasübergangstemperatur. Diese Kombination der Eigenschaften bringt jedoch spezielle Herausforderungen für den Einsatz von Polycarbonaten in additiven Fertigungsverfahren mit sich. Hierbei handelt es sich insbesondere um die Haftung von einzelnen Strang- oder Partikellagen untereinander.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, mit dem Polycarbonat-basierte Aufbaumaterialien mit einer verbesserten Haftung der einzelnen Lagen untereinander verarbeitet werden können.

Erfindungsgemäß gelöst wird die Aufgabe durch ein Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstandes in einem additiven Fertigungsverfahren mit Lagen aus unterschiedlichen Materialien umfasst die Schritte:

I) Bereitstellen eines zumindest teilweise auf eine Temperatur oberhalb seiner Glasübergangstemperatur erwärmten Aufbaumaterials auf einem Träger, so dass eine Lage des Aufbaumaterials erhalten wird, welche einem ersten ausgewählten Querschnitt des Gegenstands entspricht;

II) Bereitstellen eines zumindest teilweise auf eine Temperatur oberhalb seiner Glasübergangstemperatur erwärmten Aufbaumaterials auf eine zuvor bereitgestellte Lage des Aufbaumaterials, so dass eine weitere Lage des Aufbaumaterials erhalten wird, welche einem weiteren ausgewählten Querschnitt des Gegenstands entspricht und welche mit der zuvor bereitgestellten Lage verbunden ist;

III) Wiederholen des Schritts II), bis der Gegenstand gebildet ist.

In dem Verfahren ist in den einzelnen Schritten II) das Aufbaumaterial jeweils aus einem ersten Aufbaumaterial oder einem hiervon verschiedenen zweiten Aufbaumaterial ausgewählt, wobei das erste Aufbaumaterial ein Polycarbonat ist, das zweite Aufbaumaterial ein thermoplastisches Polyurethan-Polymer ist, wenigstens einmal Schritt II) mit den ersten Aufbaumaterial durchgeführt wird und wenigstens einmal Schritt II) mit den zweiten Aufbaumaterial durchgeführt wird.

Das additive Fertigungsverfahren ist bevorzugt ausgewählt aus der Gruppe bestehend aus Schmelzschichtung (Fused Filament Fabrication, FFF oder Fused Deposition Modeling, FDM), Selective Laser Sintering, Selective Laser Melting und High Speed Sintering oder einer Kombination aus mindestens zwei hiervon. Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C, kurzfristig auch noch höher bis zu etwa 450 °C, betragen. Es ist zudem möglich, den Substrattisch zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Es ist erfindungsgemäß vorgesehen, dass das erste Aufbaumaterial ein Polycarbonat ist und, dass dass das zweite Aufbaumaterial ein thermoplastisches Polyurethan-Polymer ist. In einer Ausführungsform, die nicht Teil der Erfindung ist, können sich die Aufbaumaterialien chemisch und/oder in ihren physikalischen Eigenschaften voneinander unterscheiden. So können auch innerhalb einer Stoffklasse wie beispielsweise der Polycarbonate zwei verschiedene Materialien für das erste und das zweite Aufbaumaterial ausgewählt werden.

Das zweite Aufbaumaterial kann sich vom ersten Aufbaumaterial dadurch unterscheiden, dass es gegebenenfalls teilkristallin ist und eine Glasübergangstemperatur aufweist, welche mehr als 50 °C (bevorzugt mehr als 70 °C, mehr bevorzugt mehr als 90 °C) unterhalb der Glasübergangstemperatur des ersten Aufbaumaterials liegt. Es ist auch möglich, dass dasjenige Aufbaumaterial, welches die niedrigere Glasübergangstemperatur aufweist, einen Schmelzpunkt von > 10 °C (bevorzugt > 25 °C, ganz besonders bevorzugt > 40 °C) oberhalb des Schmelzpunkt des Aufbaumaterials mit der höheren Glasübergangstemperatur aufweist.

Die eingesetzten Aufbaumaterialien können transparent, transluzent oder opak sein. Die Transparenz von erstem und zweitem Aufbaumaterial liegt bevorzugt im sichtbaren Bereich bei einer 1 mm dicken Platte jeweils über 60%, vorzugsweise über 70% und mehr bevorzugt über 80%. Der Yellowness Index von transparenten Aufbaumaterialien liegt bevorzugt unter 20, vorzugsweise unter 15, besonders bevorzugt unter 10.

Das erfindungsgemäße Verfahren kann innerhalb eines Bauraums durchgeführt werden und die Temperatur des Bauraums ist bevorzugt ≥ 10 °C, oder bevorzugt ≥ 20 °C, oder bevorzugt ≥ 30 °C geringer als die Glasübergangstemperatur $T_g$ des ersten Aufbaumaterials (bestimmt durch DSC gemäß DIN EN ISO 11357 bei einer Heizrate von 10 °C/min). Damit ist besonders bei komplexen und großen Bauteilen mit langer Fertigungszeit eine deutlich geringere thermische Belastung und bessere Maßhaltigkeit des Bauteils verbunden. Die Bauraumtemperatur liegt bevorzugt bei ≤ 140 °C, oder bevorzugt ≤ 130 °C und mehr bevorzugt ≤ 120 °C.

Neben der Bauraumtemperatur kann die Temperatur des Bauuntergrunds im erfindungsgemäßen Verfahren, auf der der Druck der ersten Lage erfolgt, eine Rolle spielen. Die Temperatur des Baugrunds ist in diesem Zusammenhang bevorzugt größer als die Glasübergangstemperatur von mindestens einem der Aufbaumaterialien.

Im ersten Aufbaumaterial einsetzbare Polycarbonat-Polymere im Sinne der vorliegenden Erfindung sind sowohl Homopolycarbonate als auch Copolycarbonate; die Polycarbonate können in bekannter Weise linear oder verzweigt sein. Erfindungsgemäß können auch Mischungen von Polycarbonaten verwendet werden. Die Polycarbonate können aromatische, aliphatische oder gemischt aromatisch/aliphatische Polycarbonat-Polymere sein. Die Herstellung der Polycarbonate erfolgt in bekannter Weise aus Diolen, Kohlensäurederivaten, gegebenenfalls Kettenabbrechern und Verzweigern.

Einzelheiten der Herstellung von Polycarbonaten sind in vielen Patentschriften niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von tri funktionellen oder mehr als tri funktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen. Bevorzugte Diphenole sind 4,4'-Dihydroxydiphenyl,2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4- hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A. Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 21 1 956 und DE-A 3 832 396. in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Geeignete aliphatische Diole sind insbesondere solche der Formel H[O-T-]$_n$-OH wobei n eine Zahl zwischen 1 und 100, bevorzugt 1 bis 80 und besonders bevorzugt 1 bis 45 und T einen verzweigten oder linearen, gesättigten oder ungesättigten Alkyl-, Cycloalkylteil mit 3 bis 20 Kohlenstoffatomen darstellt. Bevorzugt sind gesättigte, lineare Alkyldiole mit 3 bis 15 Kohlenstoffatomen, besonders bevorzugt mit 3 - 10 Kohlenstoffatomen, ganz besonders bevorzugt mit 6-10 Kohlenstoffatomen und insbesondere auch 7-10 Kohlenstoffatomen.

Exemplarisch, aber nicht ausschließlich genannt seien 1,7-Heptandiol, 1,8-Octandiol, 1,6-Hexandiol, 1,5-Pentandiol, 1,4-Butandiol, 1,3-Propandiol, 2-Methyl-1,3-propandiol, 3-Methyl-1,5-pentandiol, 2-Methylpentandiol, 2,2,4-Trimethyl-1,6-hexandiol, 2-Ethyl-1,6-hexandiol, 2,3,5-Trimethyl-1,6-hexandiol, Cyclohexan-dimethanol, Neopentylglykol und Polyethylenglykol, Polypropylenglykol, Polybutylenglykol sowie Polyetherpolyole, die durch Copolymerisation von z.B. Ethylenoxid und Propylenoxid erhalten wurden oder Polytetramethylenglykol, das durch ringöffnende Polymerisation von Tetrahydrofuran (THF) erhalten wurde, Di-, Tri-, und Tetrahexyletherglykol sowie Mischungen verschiedener Diole.

Weiterhin können Additionsprodukte der Diole mit Lactonen (Esterdiole) wie z.B. Caprolacton, Valerolacton etc. eingesetzt werden, sowie Mischungen der Diole mit Lactonen, wobei eine einleitende Umesterung von Lactonen und Diolen nicht nötig ist.

Eingesetzt werden können auch die Additionsprodukte der beschriebenen Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw., Ester der Dicarbonsäuren, wobei eine einleitende Umesterung von Dicarbonsäure und den Diolen nicht nötig ist. Es können auch Mischungen verschiedener Diole, Lactone und Dicarbonsäuren eingesetzt werden.

Bevorzugt werden in als aliphatische Diole 1,6-Hexandiol, 1,5-Pentandiol und Mischungen aus 1,6-Hexandiol und Caprolacton eingesetzt.

Im Fall der Homopolycarbonate wird nur ein Diol eingesetzt, im Fall der Copolycarbonate werden mindestens zwei verschiedene Diole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie Mischungen aus mindestens zwei hiervon. Bevorzugte Kettenabbrecher sind die Phenole, welche ein- oder mehrfach mit C1- bis C30-Alkylresten, linear oder verzweigt, bevorzugt unsubstituiert, oder mit tert.-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen. Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl- 4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diolen.

Die Verzweiger können entweder mit den Diolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Zur Einarbeitung von Additiven wird das Polycarbonat-Polymer bevorzugt in Form von Pulvern, Granulaten oder aus Gemischen aus Pulvern und Granulaten eingesetzt. Das Aufbaumaterial kann noch weitere Additive wie Füllstoffe, Stabilisatoren und dergleichen, aber auch weitere Polymere, enthalten. Der Gesamtgehalt an Additiven im Aufbaumaterial kann beispielsweise ≥ 0,1 Gewichts-% bis ≤ 10 Gewichts-%, bevorzugt ≥ 1 Gewichts-% bis ≤ 5 Gewichts-%, betragen.

In Schritten I) und II) des erfindungsgemäßen Verfahrens wird ein zumindest teilweise auf eine Temperatur oberhalb seiner Glasübergangstemperatur erwärmtes Aufbaumaterial bereitgestellt. Die Glasübergangstemperatur der Materialien kann durch DSC gemäß DIN EN ISO 11357 bei einer Heizrate von 10 °C/min ermittelt werden. Das Erwärmen kann beispielsweise auf bevorzugt ≥ 1 °C bis ≤ 200 °C, bevorzugt ≥ 10 °C bis ≤ 150 °C oberhalb der Glasübergangstemperatur der Materialien erfolgen. In Fällen, in denen das zweite Aufbaumaterial ein zumindest teilweise kristallines Polymer umfasst (zum Beispiel ein thermoplastisches Polyurethan), wird vorzugsweise auf eine Temperatur innerhalb des Schmelzbereichs oder oberhalb des Schmelzpunkts des Polymers erwärmt.

Es ist erfindungsgemäß weiterhin vorgesehen, dass wenigstens einmal Schritt II) mit dem ersten Aufbaumaterial durchgeführt wird und wenigstens einmal Schritt II) mit dem zweiten Aufbaumaterial durchgeführt wird. Auf diese Weise kann ein Verbund unterschiedlicher Lagen aufgebaut werden. Wie oft Schritt II) mit dem ersten Aufbaumaterial und wie oft Schritt II) mit dem zweiten Aufbaumaterial durchgeführt werden ist grundsätzlich nicht festgelegt. Es ist ebenfalls dem Anwender des Verfahrens freigestellt, die individuelle Abfolge von Schichten mit dem ersten und mit dem zweiten Aufbaumaterial zu bestimmen. Dieses kann sich nach der Funktion des herzustellenden Gegenstandes richten.

Im erfindungsgemäßen Verfahren ist es selbstverständlich möglich, mehr als zwei voneinander verschiedene Aufbaumaterialien einzusetzen. So kann in den einzelnen Schritten II) das Aufbaumaterial jeweils aus einem ersten Aufbaumaterial, einem zweiten Aufbaumaterial und einem dritten Aufbaumaterial ausgewählt sein, die jeweils voneinander verschieden sind. Dann wird Schritt II) wenigstens einmal mit dem ersten, einmal mit dem zweiten und einmal mit dem dritten Aufbaumaterial durchgeführt. Analog kann in den einzelnen Schritten II) das Aufbaumaterial jeweils aus einem ersten Aufbaumaterial, einem zweiten Aufbaumaterial, einem dritten Aufbaumaterial und einem vierten Aufbaumaterial ausgewählt sein, die jeweils voneinander verschieden sind. Dann wird Schritt II) wenigstens einmal mit dem ersten, einmal mit dem zweiten, einmal mit dem dritten und einmal mit dem vierten Aufbaumaterial durchgeführt. Auch für diese mehr als zwei unterschiedlichen Aufbaumaterialien gilt, dass sie nicht aus verschiedenen Polymerklassen ausgewählt sein müssen sondern, dass sie sich lediglich in einem Merkmal wie dem Schmelzpunkt, der Kristallinität oder einer sonstigen messbare Eigenschaft unterscheiden.

Es ist in einer Ausführungsform auch möglich, dass eine Schicht des herzustellenden Körpers aus mehr als einem Aufbaumaterial aufgebaut wird. Dann liegen beispielsweise erstes und zweites Aufbaumaterial nebeneinander vor.

In einer bevorzugten Ausführungsform des Verfahrens erfolgt in Schritten I) und II) das Bereitstellen eines zumindest teilweise auf eine Temperatur oberhalb seiner Glasübergangstemperatur erwärmten Aufbaumaterials durch Auftragen eines Filaments eines zumindest teilweise auf eine Temperatur oberhalb seiner Glasübergangstemperatur erwärmten Aufbaumaterials. Bei dieser Ausführungsform handelt es sich um ein Schmelzschichtungs- oder Fused Deposition Modeling (FDM)-Verfahren. Vorzugsweise wird ein Gerät eingesetzt, welches das erste und das zweite Aufbaumaterial in eigenen Druckköpfen verarbeiten kann. Insbesondere kann die Herstellung des Gegenstands mittels des additiven Fertigungsverfahrens die Schritte umfassen:

-   Auftragen eines Filaments eines zumindest teilweise auf eine Temperatur oberhalb seiner Glasübergangstemperatur erwärmten Aufbaumaterials auf einen Träger, so dass eine Lage des Aufbaumaterials erhalten wird, welche einem ersten ausgewählten Querschnitt des Gegenstands entspricht;

-   Auftragen eines Filaments des zumindest teilweise auf eine Temperatur oberhalb seiner Glasübergangstemperatur erwärmten Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

-   Wiederholen des Schritts des Auftragens eines Filaments des zumindest teilweise auf eine Temperatur oberhalb seiner Glasübergangstemperatur erwärmten Aufbaumaterials auf eine zuvor aufgetragene Lage des Aufbaumaterials, bis der Gegenstand gebildet ist.

Hierbei wird als Aufbaumaterial das erste beziehungsweise das zweite Aufbaumaterial, beispielsweise jeweils abwechselnd, als Aufbaumaterial im Sinne der zuvor beschriebenen Schritte eingesetzt. Bevorzugt kann die Anzahl der Lagen des ersten Aufbaumaterials jedoch auch von der Anzahl der Lagen des zweiten Aufbaumaterials oder jedes weitern Aufbaumaterials abweichen.

Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Bevorzugt werden zu dessen Aufbau $\geq 1$ bis $\leq 20$ Wiederholungen für das Auftragen durchgeführt.

Die einzelnen Filamente, welche aufgetragen werden, weisen bevorzugt einen Durchmesser von $\geq 30\ \mu m$ bis $\leq 2000\ \mu m$ auf, oder bevorzugt von $\geq 40\ \mu m$ bis $\leq 1000\ \mu m$ und besonders bevorzugt von $\geq 50\ \mu m$ bis $\leq 500\ \mu m$.

Der erste Schritt (I) betrifft den Aufbau der ersten Lage auf einen Träger. Anschließend wird der zweite Schritt (II) so lange ausgeführt, in dem auf zuvor aufgetragene Lagen des Aufbaumaterials weitere Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des zuvor aufgebrachten Aufbaumaterials, um eine Struktur in z-Richtung aufzubauen.

In einer weiteren bevorzugten Ausführungsform des Verfahrens erfolgt in Schritten I) und II) das Bereitstellen eines zumindest teilweise auf eine Temperatur oberhalb seiner Glasübergangstemperatur erwärmten Aufbaumaterials durch Einwirken von Energie auf eine Pulverschicht des Aufbaumaterials. Insbesondere kann die Herstellung des Gegenstands mittels des additiven Fertigungsverfahrens die Schritte umfassen:

-   Auftragen einer Schicht aus, das Aufbaumaterial aufweisenden, Partikeln auf eine Zielfläche;

-   Einwirken von Energie auf einen ausgewählten Teil der Schicht, entsprechend einem Querschnitt des Gegenstands, so dass die Partikel im ausgewählten Teil verbunden werden;

-   Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist bevorzugt, dass mindestens 90 Gewichts-% der Partikel einen Teilchendurchmesser von ≤ 0.25 mm, bevorzugt ≤ 0.2 mm, besonders bevorzugt ≤ 0.15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

Es ist möglich, dass das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:

- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 μm. Der Laser kann als Halbleiterlaser oder als Gaslaser ausgeführt sein. Denkbar ist auch ein Elektronenstrahl.

Es ist auch möglich, dass das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:

- Auftragen einer Flüssigkeit auf einen ausgewählten Teil der Schicht, entsprechend einem Querschnitt des Gegenstandes, wobei die Flüssigkeit die Absorption der einwirkenden Energie in den von ihr kontaktierten Bereichen der Schicht relativ zu den nicht von ihr kontaktierten Bereichen erhöht;

- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren bevorzugten Ausführungsform des Verfahrens beträgt die Anzahl der Schritte II) unter Einsatz des ersten Aufbaumaterials ≥ 80% bis ≤ 120% (vorzugsweise ≥ 90% bis ≤ 110%) der Anzahl der Schritte II) unter Einsatz des zweiten Aufbaumaterials. Dann wird der herzustellende Gegenstand annähernd zu gleichen Teilen aus dem ersten und dem zweiten Aufbaumaterial aufgebaut.

In einer weiteren bevorzugten Ausführungsform des Verfahrens werden in den Schritten II) abwechselnd das erste und das zweite Aufbaumaterial eingesetzt. Auf diese Weise erhält man eine alternierende Schichtenfolge des ersten und des zweiten Aufbaumaterials.

In einer weiteren bevorzugten Ausführungsform des Verfahrens weist das erste Aufbaumaterial eine Vicat-Erweichungstemperatur nach DIN EN ISO 306, ermittelt mit einer Prüfkraft von 50 N und einer Heizrate von 120 K/h (Vicat B/120), von ≥ 150 °C bis ≤ 220 °C auf. Vorzugsweise beträgt diese Temperatur ≥ 160 °C bis ≤ 205 °C, mehr bevorzugt ≥ 170 °C bis ≤ 195 °C.

In einer weiteren bevorzugten Ausführungsform des Verfahrens weist das zweite Aufbaumaterial eine Vicat-Erweichungstemperatur nach DIN EN ISO 306, ermittelt mit einer Prüfkraft von 50 N und einer Heizrate von 120 K/h (Vicat B/120), von ≥ 100 °C bis ≤ 170 °C auf. Vorzugsweise beträgt diese Temperatur ≥ 110 °C bis ≤ 160 °C, mehr bevorzugt ≥ 120 °C bis ≤ 150 °C.

In einer weiteren bevorzugten Ausführungsform des Verfahrens umfasst das erste Aufbaumaterial ein Polycarbonat-Polymer mit Diphenoleinheiten, welche von 4,4'-(3,3,5-Trimethylcyclohexyliden)bisphenol (Bisphenol TMC) abgeleitet sind. Bevorzugt ist ein Polycarbonat-Polymer, welches Diphenoleinheiten umfasst, welche von Bisphenol TMC und von Bisphenol A abgeleitet sind. Solche Copolymere sind kommerziell unter dem Namen Apec® der Covestro AG, Leverkusen, DE, erhältlich. Bezogen auf die eingesetzte Stoffmenge an Diphenolen kann das Polycarbonat-Polymer beispielsweise ≥ 5 mol-% bis ≤ 95 mol-%, ≥ 10 mol-% bis ≤ 85 mol-% oder ≥ 20 mol-% bis ≤ 65 mol-% Diphenoleinheiten, welche von Bisphenol TMC abgeleitet sind, umfassen. Die Differenz zu 100 mol-% der Diphenoleinheiten wird vorzugsweise durch Diphenoleinheiten gebildet, welche von Bisphenol A abgeleitet sind.

Gemäß der Erfindung ist das zweite Aufbaumaterial ein thermoplastisches Polyurethan-Polymer. In einer weiteren bevorzugten Ausführungsform des Verfahrens ist das zweite Aufbaumaterial ein thermoplastisches Polyurethan-Elastomer, welches einen Schmelzbereich (DSC, Differential Scanning Calorimetry; zweite Aufheizung mit Aufheizrate 5 K/min) von ≥ 20 °C bis ≤ 240 °C (bevorzugt ≥ 40 °C bis ≤ 220 °C, mehr bevorzugt ≥ 70 °C bis ≤ 200 °C) aufweist und eine Shore-Härte gemäß DIN ISO 7619-1 von ≥ 40 A bis ≤ 85 D (bevorzugt ≥ 50 Shore Abis ≤ 80 Shore D, mehr bevorzugt ≥ 60 Shore Abis ≤ 75 Shore D) aufweist.

Bei dieser DSC-Messung wird das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

In einer weiteren bevorzugten Ausführungsform des Verfahrens ist das zweite Aufbaumaterial ein thermoplastisches Polyurethan-Elastomer, welches einen Schmelzbereich (DSC, Differential Scanning Calorimetry; zweite Aufheizung mit Aufheizrate 5 K/min) von ≥ 20 °C bis ≤ 240 °C (bevorzugt ≥ 40 °C bis ≤ 220 °C, mehr bevorzugt ≥ 70 °C bis ≤ 200 °C) aufweist und

eine Shore-Härte gemäß DIN ISO 7619-1 von ≥ 40 A bis ≤ 85 D (bevorzugt ≥ 50 Shore Abis ≤ 80 Shore D, mehr bevorzugt ≥ 60 Shore A bis ≤ 75 Shore D) aufweist.

Auch bei dieser DSC-Messung wird das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

In einer weiteren bevorzugten Ausführungsform des Verfahrens ist das zweite Aufbaumaterial ein thermoplastisches Polyurethanelastomer, das erhältlich ist aus der Reaktion der Komponenten:

a) mindestens ein organisches Diisocyanat
b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 2,5
c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,5-Pentamethylendiisocyanat, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'-Diphenylmethandiisocyanate oder 2,4'- Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polylactone, Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol-1,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(b-hydroxyethyl)-hydrochinon, ethoxylierte Bisphenole, z.B. 1,4-Di(b- hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten mono funktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die erfindungsgemäß verwendeten thermoplastischen Poyurethanelastomere enthalten bevorzugt als Hilfs- und/oder Zusatzstoffe bis zu maximal 50 Gew.-%, bezogen auf die Gesamtmenge an TPU, der üblichen Hilfs- und Zusatzstoffe. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und Mischungen aus mindestens zwei hiervon.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

In einer weiteren bevorzugten Ausführungsform des Verfahrens ist das zweite Aufbaumaterial ein thermoplastisches Polyurethan-Elastomer, welches einen Schmelzbereich (DSC, differential scanning calorimetry; 2. Aufheizung mit Aufheizrate 5 K/min.) von $\geq$ 20 °C bis $\leq$ 100 °C aufweist und einen Betrag der komplexen Viskosität $|\eta^*|$ (bestimmt durch Viskosimetriemessung in der Schmelze mit einem Platte/Platte-Oszillationsscherviskosimeter bei 100 °C und einer Kreisfrequenz von 1/s) von $\geq$ 10 Pas bis $\leq$ 1000000 Pas aufweist.

Dieses thermoplastische Elastomer weist einen Schmelzbereich von $\geq$ 20 °C bis $\leq$ 100 °C, vorzugsweise von $\geq$ 25 °C bis $\leq$ 90 °C und mehr bevorzugt von $\geq$ 30 °C bis $\leq$ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, $\leq$ 20 °C, bevorzugt $\leq$ 10 °C und mehr bevorzugt $\leq$ 5 °C beträgt.

Dieses thermoplastische Elastomer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Kreisfrequenzvon 1/s) von $\geq$ 10 Pas bis $\leq$ 1000000 Pas auf. Vorzugsweise beträgt $|\eta^*| \geq$ 100 Pas bis $\leq$ 500000 Pas, mehr bevorzugt $\geq$ 1000 Pas bis $\leq$ 200000 Pas.

Der Betrag der komplexen Viskosität $|\eta^*|$ beschreibt das Verhältnis der viskoelastischen Moduln *G'* (Speichermodul) und G" (Verlustmodul) zur Anregungsfrequenz $\omega$ in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

In einer weiteren bevorzugten Ausführungsform des Verfahrens ist das zweite Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von $\geq$ 25 °C bis $\leq$ 100 °C aufweist.

Bevorzugt können bei der Reaktion zu diesem Polyurethan weiterhin Diole des Molekulargewichtsbereichs von $\geq$ 62 bis $\leq$ 600 g/mol als Kettenverlängerungsmittel eingesetzt werden. Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe umfassend: 2,2,4-Trimethyl-hexamethylendiisocyanat, Ethylethylendiisocyanat, nicht-symmetrische Isomere des Dicyclohexylmethandiisocyanat ($H_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI und/oder PDI als Polyisocyanatkomponente.

Diese Polyolkomponente weist ein Polyesterpolyol auf, welches einen Stockpunkt (No Flow Point, ASTM D5985) von $\geq 25\,°C$ bis $\leq 100\,°C$, vorzugsweise $\geq 35\,°C$ bis $\leq 70\,°C$, mehr bevorzugt $\geq 35\,°C$ bis $\leq 55\,°C$ aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-$C_4$- bis $C_{10}$-Dicarbonsäuren mit einem oder mehreren $C_2$- bis $C_{10}$-Diolen. Sie weisen bevorzugt ein zahlenmittleres Molekulargewicht $M_n$ von $\geq 400$ g/mol bis $\leq 6000$ g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von $\geq 25$ bis $\leq 170$ mg KOH/g und/oder eine Viskosität (75 °C, DIN 51550) von $\geq 50$ bis $\leq 5000$ mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq 1{:}4$ bis $\leq 4{:}1$ erhältlich ist und welches ein zahlenmittleres Molekulargewicht $M_n$ (GPC, gegen Polystyrol-Standards) von $\geq 4000$ g/mol bis $\leq 6000$ g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Kreisfrequenz von 1/s) von $\geq 4000$ Pas bis $\leq 160000$ Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

   a) Polyesterdiolen eines über 600 liegenden Molekulargewichts und gegebenenfalls

   b) Diolen des Molekulargewichtsbereichs von 62 bis 600 g/mol als Kettenverlängerungsmittel mit

   c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für $\geq$ 1 Minute (bevorzugt $\geq$ 1 Minute bis $\leq$ 30 Minuten, mehr bevorzugt $\geq$ 10 Minuten bis $\leq$ 15 Minuten), ein Speichermodul G' (bestimmt bei der jeweils herrschenden Temperatur mit einem Platte/Platte-Oszillationsviskosimeter gemäß ISO 6721-10 bei einer Kreisfrequenz von 1/s) von $\geq$ 100 kPa bis $\leq$ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10 bei einer Kreisfrequenz von 1/s) von $\geq$ 10 MPa aufweist.

In einer weiteren bevorzugten Ausführungsform des Verfahrens beträgt der absolute Unterschied in den Brechungsindices $n^{20}_D$ zwischen erstem und zweitem Aufbaumaterial $\geq 0.01$. Dadurch werden im hergestellten Gegenstand gewünscht Lichtstreueffekte erreicht, insbesondere wenn sich Lagen aus erstem und zweitem Aufbaumaterial abwechseln. Vorzugsweise beträgt dieser Unterschied $\geq 0.02$, mehr bevorzugt $\geq 0.03$.

Ein weiterer Aspekt der vorliegenden Offenbarung ist ein durch ein erfindungsgemäßes Verfahren erhältlicher Gegenstand, welcher Lagen eines ersten und eines zweiten Aufbaumaterials umfasst, wobei das erste Aufbaumaterial ein Polycarbonat-Polymer und das zweite Aufbaumaterial von dem ersten Aufbaumaterial verschieden ist und wobei der Gegenstand in Aufbaurichtung des in seiner Herstellung eingesetzten additiven Herstellungsverfahrens eine Zugfestigkeit (ISO 527) aufweist, welche $\geq$ 30% bis $\leq$ 100% (bevorzugt $\geq$ 40%, mehr bevorzugt $\geq$ 50%) der Zugfestigkeit (ISO 527) eines spritzgegossenen Probenkörpers aus demjenigen Aufbaumaterial, ausgewählt aus dem ersten und dem zweiten Aufbaumaterial, welches die geringere Zugfestigkeit besitzt, beträgt. Diese Zugfestigkeiten im additiv gefertigten Gegenstand betreffen somit die Haftung einzelner Lagen des Aufbaumaterials zueinander. Vorzugsweise wechseln sich Lagen des ersten und des zweiten Aufbaumaterials im Gegenstand zumindest teilweise ab.

Weiter bevorzugt ist, dass das das erste Aufbaumaterial ein Polycarbonat-Polymer mit Diphenoleinheiten umfasst, welche von 4,4'-(3,3,5-Trimethylcyclohexyliden)bisphenol (Bisphenol TMC) abgeleitet sind. Bevorzugt ist ein Polycarbonat-Polymer, welches Diphenoleinheiten umfasst, welche von Bisphenol TMC und von Bisphenol A abgeleitet sind. Solche Copolymere sind kommerziell unter dem Namen Apec® der Covestro AG, Leverkusen, DE, erhältlich. Bezogen auf die eingesetzte Stoffmenge an Diphenolen kann das Polycarbonat-Polymer beispielsweise $\geq$ 5 mol-% bis $\leq$ 95 mol-%, $\geq$ 10 mol-% bis $\leq$ 85 mol-% oder $\geq$ 20 mol-% bis $\leq$ 65 mol-% Diphenoleinheiten, welche von Bisphenol TMC abgeleitet sind, umfassen. Die Differenz zu 100 mol-% der Diphenoleinheiten wird vorzugsweise durch Diphenoleinheiten gebildet, welche von Bisphenol A abgeleitet sind.

Es ist ferner bevorzugt, dass das zweite Aufbaumaterial ein Polycarbonat mit Diphenoleinheiten umfasst, welche von Bisphenol A abgeleitet sind. Es ist auch bevorzugt, dass das zweite Aufbaumaterial ein thermoplastisches Polyurethan umfasst, wie zuvor beschrieben wurde.

**Beispiele:**

Die vorliegende Erfindung wird anhand der nachfolgenden Beispiele weiter erläutert, ohne jedoch darauf beschränkt zu sein.

**Beispiel 1: Druck von Probenkörpern für den Zugversuch**

Als erstes Aufbaumaterial wurde ein Filament, hergestellt aus dem Polycarbonat (PC) *Makrolon® 3D1000,* bezogen von der *Covestro Deutschland AG,* verwendet. Als zweites Aufbaumaterial wurde ein Filament, hergestellt aus dem Thermoplastischen Polyurethan *Desmopan® 9385 A* (TPU1), bezogen von der *Covestro Deutschland AG,* verwendet. Die Durchmesser der Filamente der beiden Aufbaumaterialien betrugen jeweils 1,75 mm.

Aus den Aufbaumaterialien wurden 5 Probenkörper in der Form von S2- Zugstäben (ISO 527) mit einem 3D Drucker *Prusa i3 MK2S* der Firma Prusa Research s.r.o. hergestellt. Dabei wurden die Probenkörper aufrecht stehend gedruckt, d. h. die Lagen sind senkrecht zur Zugrichtung abgelegt. Die Probenkörper wurden bis zur Hälfte der Höhe (37,5 mm) mit dem ersten Aufbaumaterial gedruckt. Anschließend wurden die zweiten Hälften der Probenkörper mit dem zweiten Aufbaumaterial, gedruckt. Die Druckbedingungen für die beiden Aufbaumaterialien sind wie folgt:

| | Düsentemperatur | Substrattemperatur | Ablagegeschwindigkeit | Düsendurchmesser | Schichtdicke der einzelnen Lage |
|------|-----------------|--------------------|-----------------------|------------------|----------------------------------|
| PC | 285 °C | 90 °C | 30 mm/s | 0,4 mm | 0,15 mm |
| TPU1 | 240 °C | 90 °C | 24 mm/s | 0,4 mm | 0,15 mm |

**Beispiel 2: Zugversuch der Probenkörper**

Die Probenkörper aus den Aufbaumaterialien PC und TPU1 gemäß Beispiel 1 wurden in einem Zugversuch (nach ISO 527) mit der Zugdehnungsprüfmaschine Z1.0 1kN Zwicki von Zwick Roell bis zum Bruch belastet. Bei der anschließenden Untersuchung der gebrochenen Probenkörper wurde festgestellt, dass der Bruch nicht an der Grenzfläche der beiden Aufbaumaterialien auftrat, sondern in allen Fällen innerhalb eines Aufbaumaterials.

Daraus kann geschlossen werden, dass die Interlagen-Haftung zwischen den beiden Aufbaumaterialien höher ist als die Interlagenhaftung eines Ausbaumaterials.

**Beispiel 3: Druck von Probenkörpern für den Schälversuch**

Für die Schälversuche wurden die folgenden Aufbaumaterialien verwendet:

TPU2 : thermoplastisches Polyurethan *Desmopan® DP 3690 AU,* Shore A 93, Shore D 40.
PC: *Makroion® 3D1000.*

Beide Materialien wurden von der *Covestro Deutschland AG* bezogen. Die Durchmesser der Filamente aus beiden Aufbaumaterialien betrugen jeweils 1,75 mm. Es wurde ein FDM-Drucker des Typs Prusa *i3 MK2S* der Firma Prusa Research s.r.o. mit den folgenden Verfahrensbedingungen eingesetzt:

|      | Ablagegeschwindigkeit | Druckkopftemperatur | Heizbetttemperatur | Düsedurchmesser | Schichtdicke |
|------|-----------------------|---------------------|--------------------|-----------------|--------------|
| TPU2 | 24 mm/s | 240 °C | 23 °C | 0,4 mm | 0,2 mm |
| PC | 30 mm/s | 285 °C | 90 °C | 0,4 mm | 0,2 mm |

Der Bauraum des verwendeten FDM-Druckers ist nicht eingehaust, daraus folgt, dass die Bauraumtemperatur gleich der Raumtemperatur (ca. 23 °C) war.

Auf dem FDM-Drucker wurden 160 mm breite, 1 mm dicke und 300 mm lange Prüfkörper aus einem ersten Polymer gedruckt. Auf den so hergestellten Prüfkörper wurde ein gleicher Prüfkörper aus einem zweiten Polymer aufgedruckt, wobei die letzten 50 mm des unteren Prüfkörpers durch ein Blatt Papier so abgedeckt wurden, dass ein 50 mm langes, nicht durch die nächsten Lagen Aufbarumaterial kontaktiertes Areal gebildet wurde.

**Beispiel 4: Schälversuch der Probenkörper**

Die verbundenen Prüfkörper gemäß Bespiel 3 wurden in 30 mm breite Streifen geschnitten und anschließend in eine Zugmaschine eingespannt und in einem 180° Schälversuch nach DIN EN ISO 11339 auf Adhäsionsfestigkeit geprüft. Die Abzugskraft (N) wurde über den zurückgelegten Schälweg (mm) aufgenommen. Das Integral unter dieser Kurve entspricht der geleisteten Arbeit, mit der das erste Aufbaumaterial vom zweiten Aufbaumaterial getrennt wurde. Die Ergebnisse sind in der nachfolgenden Tabelle wiedergeben. Man erkennt, dass wesentlich mehr Arbeit aufgewendet werden musste, um die gedruckte Lage TPU2 von PC zu trennen, als eine Lage PC von einer Lage PC. Daraus kann geschlossen werden, dass die Interlagen-Haftung zwischen den beiden verschiedenen Aufbaumaterialien höher ist als die Interlagenhaftung des PC bei den gewählten Druckparametern.

| Aufbaumaterial 1/2 | Arbeit [J] |
|--------------------|------------|
| TPU2 / PC | 2,3 |
| PC / PC | 0,4 |

**Patentansprüche**

1.  Verfahren zur Herstellung eines Gegenstandes in einem additiven Fertigungsverfahren mit Lagen aus unterschiedlichen Materialien, umfassend die Schritte:

I) Bereitstellen eines zumindest teilweise auf eine Temperatur oberhalb seiner Glasübergangstemperatur erwärmten Aufbaumaterials auf einem Träger, so dass eine Lage des Aufbaumaterials erhalten wird, welche einem ersten ausgewählten Querschnitt des Gegenstands entspricht;

II) Bereitstellen eines zumindest teilweise auf eine Temperatur oberhalb seiner Glasübergangstemperatur erwärmten Aufbaumaterials auf einer zuvor bereitgestellten Lage des Aufbaumaterials, so dass eine weitere Lage des Aufbaumaterials erhalten wird, welche einem weiteren ausgewählten Querschnitt des Gegenstands entspricht und welche mit der zuvor bereitgestellten Lage verbunden ist;

III) Wiederholen des Schritts II), bis der Gegenstand gebildet ist;

wobei in den einzelnen Schritten II) das Aufbaumaterial jeweils aus einem ersten Aufbaumaterial oder einem hiervon verschiedenen zweiten Aufbaumaterial ausgewählt ist, wobei das erste Aufbaumaterial ein Polycarbonat ist, **dadurch gekennzeichnet, dass** das zweite Aufbaumaterial ein thermoplastisches Polyurethan-Polymer ist, und, dass wenigstens einmal Schritt II) mit dem ersten Aufbaumaterial durchgeführt wird und wenigstens einmal Schritt II) mit dem zweiten Aufbaumaterial durchgeführt wird.

2. Verfahren gemäß Anspruch 1, **dadurch gekennzeichnet, dass** in Schritten I) und II) das Bereitstellen eines zumindest teilweise auf eine Temperatur oberhalb seiner Glasübergangstemperatur erwärmten Aufbaumaterials durch Auftragen eines Filaments eines zumindest teilweise auf eine Temperatur oberhalb seiner Glasübergangstemperatur erwärmten Aufbaumaterials erfolgt.

3. Verfahren gemäß Anspruch 1, **dadurch gekennzeichnet, dass** in Schritten I) und II) das Bereitstellen eines zumindest teilweise auf eine Temperatur oberhalb seiner Glasübergangstemperatur erwärmten Aufbaumaterials durch Einwirken von Energie auf eine Pulverschicht des Aufbaumaterials erfolgt.

4. Verfahren gemäß einem der Ansprüche 1 bis 3, **dadurch gekennzeichnet, dass** die Anzahl der Schritte II) unter Einsatz des ersten Aufbaumaterials ≥ 80% bis ≤ 120% der Anzahl der Schritte II) unter Einsatz des zweiten Aufbaumaterials beträgt.

5. Verfahren gemäß einem der Ansprüche 1 bis 4, **dadurch gekennzeichnet, dass** in den Schritten II) abwechselnd das erste und das zweite Aufbaumaterial eingesetzt werden.

6. Verfahren gemäß einem der Ansprüche 1 bis 5, **dadurch gekennzeichnet, dass** das erste Aufbaumaterial eine Vicat-Erweichungstemperatur nach DIN EN ISO 306, ermittelt mit einer Prüfkraft von 50 N und einer Heizrate von 120 K/h, von ≥ 150 °C bis ≤ 220 °C aufweist.

7. Verfahren gemäß einem der Ansprüche 1 bis 6, **dadurch gekennzeichnet, dass** das zweite Aufbaumaterial eine Vicat-Erweichungstemperatur nach DIN EN ISO 306, ermittelt mit einer Prüfkraft von 50 N und einer Heizrate von 120 K/h, von ≥ 100 °C bis ≤ 170 °C aufweist.

8. Verfahren gemäß einem der Ansprüche 1 bis 7, **dadurch gekennzeichnet, dass** das erste Aufbaumaterial ein Polycarbonat-Polymer mit Diphenoleinheiten umfasst, welche von 4,4'-(3,3,5-Trimethylcyclohexyliden)bisphenol (Bisphenol TMC) abgeleitet sind.

9. Verfahren gemäß einem der Ansprüche 1 bis 8, **dadurch gekennzeichnet, dass** das zweite Aufbaumaterial ein thermoplastisches Polyurethan-Elastomer umfasst, welches einen Schmelzbereich (DSC, Differential Scanning Calorimetry; zweite Aufheizung mit Aufheizrate 5 K/min) von ≥ 20 °C bis ≤ 240 °C aufweist und eine Shore-Härte gemäß DIN ISO 7619-1 von ≥ 40 A bis ≤ 85 D aufweist.

10. Verfahren gemäß einem der Ansprüche 1 bis 9, **dadurch gekennzeichnet, dass** das zweite Aufbaumaterial ein thermoplastisches Polyurethanelastomer umfasst, das erhältlich ist aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 2,5

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

11. Verfahren gemäß einem der Ansprüche 1 bis 10, **dadurch gekennzeichnet, dass** das zweite Aufbaumaterial ein thermoplastisches Polyurethan-Elastomer umfasst, das erhältlich ist aus der Reaktion einer Polyisocyanatkomponente und einer Polyolkomponente, wobei die Polyolkomponente ein Polyesterpolyol umfasst, welches einen Stock-

punkt (ASTM D5985) von $\geq$ 25 °C bis $\leq$ 100 °C aufweist.

12. Verfahren gemäß einem der Ansprüche 1 bis 11, **dadurch gekennzeichnet, dass** der absolute Unterschied in den Brechungsindices $n^{20}_D$ zwischen erstem und zweitem Aufbaumaterial $\geq$ 0.01 beträgt.

**Claims**

1.  Process for producing an article in an additive manufacturing method with layers of different materials, comprising the steps of:

    I) providing a construction material heated at least partly to a temperature above its glass transition temperature on a carrier, such that a layer of the construction material is obtained, corresponding to a first selected cross section of the article;
    II) providing a construction material heated at least partly to a temperature above its glass transition temperature on a previously provided layer of the construction material, such that a further layer of the construction material is obtained, corresponding to a further selected cross section of the article and bonded to the previously provided layer;
    III) repeating step II) until the article is formed;

    wherein
    the construction material in each of the individual steps II) is selected from a first construction material or a second construction material different therefrom, where
    the first construction material is a polycarbonate, **characterized in that**
    the second construction material is a thermoplastic polyurethane polymer, and **in that**
    step II) is conducted at least once with the first construction material and
    step II) is conducted at least once with the second construction material.

2.  Process according to Claim 1, **characterized in that**, in steps I) and II), the providing of a construction material heated at least partly to a temperature above its glass transition temperature is effected by applying a filament of a construction material heated at least partly to a temperature above its glass transition temperature.

3.  Process according to Claim 1, **characterized in that**, in steps I) and II), the providing of a construction material heated at least partly to a temperature above its glass transition temperature is effected by the action of energy on a powder layer of the construction material.

4.  Process according to any of Claims 1 to 3, **characterized in that** the number of steps II) using the first construction material is $\geq$ 80% to $\leq$ 120% of the number of steps II) using the second construction material.

5.  Process according to any of Claims 1 to 4, **characterized in that** the first and second construction materials are used alternately in the steps II).

6.  Process according to any of Claims 1 to 5, **characterized in that** the first construction material has a Vicat softening temperature to DIN EN ISO 306, determined with a testing force of 50 N and a heating rate of 120 K/h, of $\geq$ 150°C to $\leq$ 220°C.

7.  Process according to any of Claims 1 to 6, **characterized in that** the second construction material has a Vicat softening temperature to DIN EN ISO 306, determined with a testing force of 50 N and a heating rate of 120 K/h, of $\geq$ 100°C to $\leq$ 170°C.

8.  Process according to any of Claims 1 to 7, **characterized in that** the first construction material comprises a polycarbonate polymer having diphenol units derived from 4,4'-(3,3,5-trimethylcyclohexylidene)bisphenol (bisphenol TMC).

9.  Process according to any of Claims 1 to 8, **characterized in that** the second construction material comprises a thermoplastic polyurethane elastomer having a melting range (DSC, differential scanning calorimetry; second heating at a heating rate of 5 K/min) of $\geq$ 20°C to $\leq$ 240°C and a Shore hardness according to DIN ISO 7619-1 of $\geq$ 40 A to $\leq$ 85 D.

**10.** Process according to any of Claims 1 to 9, **characterized in that** the second construction material comprises a thermoplastic polyurethane elastomer obtainable from the reaction of the following components:

> a) at least one organic diisocyanate
> b) at least one compound having isocyanate-reactive groups and having a number-average molecular weight ($M_n$) of $\geq$ 500 g/mol to $\leq$ 6000 g/mol and a number-average functionality of the sum total of the components b) of $\geq$ 1.8 to $\leq$ 2.5
> c) at least one chain extender having a molecular weight (Mn) of 60-450 g/mol and a number-average functionality of the sum total of the chain extenders c) of 1.8 to 2.5.

**11.** Process according to any of Claims 1 to 10, **characterized in that** the second construction material comprises a thermoplastic polyurethane elastomer obtainable from the reaction of a polyisocyanate component and a polyol component, wherein the polyol component comprises a polyester polyol having a no-flow point (ASTM D5985) of $\geq$ 25°C to $\leq$ 100°C.

**12.** Process according to any of Claims 1 to 11, **characterized in that** the absolute difference in the refractive indices $n^{20}_D$ between the first and second construction materials is $\geq$ 0.01.

**Revendications**

**1.** Procédé pour la préparation d'un objet dans un procédé de fabrication additif avec des couches de différents matériaux, comprenant les étapes de :

> I) mise à disposition d'un matériau de construction chauffé au moins partiellement à une température supérieure à sa température de transition vitreuse sur un support de sorte qu'une couche du matériau de construction est obtenue, qui correspond à une première section transversale choisie de l'objet ;
> II) mise à disposition d'un matériau de construction chauffé au moins partiellement à une température supérieure à sa température de transition vitreuse sur une couche du matériau de construction mise à disposition précédemment, de sorte qu'une couche supplémentaire du matériau de construction est obtenue, qui correspond à une section transversale choisie supplémentaire de l'objet et qui est reliée avec la couche mise à disposition précédemment ;
> III) répétition de l'étape II), jusqu'à ce que l'objet soit formé ;

dans lequel dans les étapes individuelles II), le matériau de construction est à chaque fois choisi parmi un premier matériau de construction et un deuxième matériau de construction différent de celui-ci, le premier matériau de construction étant un polycarbonate, **caractérisé en ce que** le deuxième matériau de construction est un polymère de type polyuréthane thermoplastique, et **en ce que** l'étape II) est mise en œuvre au moins une fois avec le premier matériau de construction et l'étape II) est mise en œuvre au moins une fois avec le deuxième matériau de construction.

**2.** Procédé selon la revendication 1, **caractérisé en ce que** dans les étapes I) et II), la mise à disposition d'un matériau de construction chauffé au moins partiellement à une température supérieure à sa température de transition vitreuse est réalisée par dépôt d'un filament d'un matériau de construction chauffé au moins partiellement à une température supérieure à sa température de transition vitreuse.

**3.** Procédé selon la revendication 1, **caractérisé en ce que** dans les étapes I) et II), la mise à disposition d'un matériau de construction chauffé au moins partiellement à une température supérieure à sa température de transition vitreuse est réalisée par l'action d'énergie sur une couche de poudre du matériau de construction.

**4.** Procédé selon l'une quelconque des revendications 1 à 3, **caractérisé en ce que** le nombre d'étapes II) avec utilisation du premier matériau de construction représente $\geq$ 80 % à $\leq$ 120 % du nombre d'étapes II) avec utilisation du deuxième matériau de construction.

**5.** Procédé selon l'une quelconque des revendications 1 à 4, **caractérisé en ce que**, dans les étapes II), le premier et le deuxième matériau de construction sont utilisés en alternance.

**6.** Procédé selon l'une quelconque des revendications 1 à 5, **caractérisé en ce que** le premier matériau de construction présente une température de ramollissement Vicat selon la norme DIN EN ISO 306, déterminée avec une force d'essai de 50 N et une vitesse de chauffage de 120 K/h, de $\geq$ 150 °C à $\leq$ 220 °C.

7. Procédé selon l'une quelconque des revendications 1 à 6, **caractérisé en ce que** le deuxième matériau de construction présente une température de ramollissement Vicat selon la norme DIN EN ISO 306, déterminée avec une force d'essai de 50 N et une vitesse de chauffage de 120 K/h, de $\geq$ 100 °C à $\leq$ 170 °C.

8. Procédé selon l'une quelconque des revendications 1 à 7, **caractérisé en ce que** le premier matériau de construction comprend un polymère de type polycarbonate comportant des motifs de type diphénol, qui sont issus du 4,4'-(3,3,5-triméthylcyclohexylidène)bisphénol (bisphénol TMC).

9. Procédé selon l'une quelconque des revendications 1 à 8, **caractérisé en ce que** le deuxième matériau de construction comprend un élastomère de polyuréthane thermoplastique, qui présente une plage de fusion (DSC, Differential Scanning Calorimetry - calorimétrie différentielle à balayage ; deuxième chauffage avec une vitesse de chauffage de 5 K/min) de $\geq$ 20 °C à $\leq$ 240 °C et une dureté Shore selon la norme DIN ISO 7619-1 de $\geq$ 40 A à $\leq$ 85 D.

10. Procédé selon l'une quelconque des revendications 1 à 9, **caractérisé en ce que** le deuxième matériau de construction comprend un élastomère de polyuréthane thermoplastique qui peut être obtenu par la réaction des composants :

a) au moins un diisocyanate organique
b) au moins un composé présentant des groupes réactifs envers des groupes isocyanate doté d'un poids moléculaire moyen en nombre ($M_n$) de $\geq$ 500 g/mole à $\leq$ 6 000 g/mole et d'une fonctionnalité moyenne en nombre de la totalité des composants au point b) de $\geq$ 1,8 à $\leq$ 2,5
c) au moins un agent d'extension de chaînes doté d'un poids moléculaire ($M_n$) de 60 à 450 g/mole et d'une fonctionnalité moyenne en nombre de la totalité des agents d'extension de chaînes au point c) de 1,8 à 2,5.

11. Procédé selon l'une quelconque des revendications 1 à 10, **caractérisé en ce que** le deuxième matériau de construction comprend un élastomère de polyuréthane thermoplastique, qui peut être obtenu par la réaction d'un composant de polyisocyanate et d'un composant de polyol, le composant de polyol comprenant un polyesterpolyol, qui présente un point d'écoulement (norme ASTM D5985) de $\geq$ 25 °C à $\leq$ 100 °C.

12. Procédé selon l'une quelconque des revendications 1 à 11, **caractérisé en ce que** la différence absolue dans les indices de réfraction $n^{20}_D$ entre le premier et le deuxième matériau de construction est $\geq$ 0,01.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015077053 A1
- WO 2015195527 A1
- WO 2015102774 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- DE 2901774 A
- EP 0192946 A1

**In der Beschreibung aufgeführte Nicht-Patentliteratur**

- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science and Engineering. 1988, vol. 11, 648-718
- Polycarbonate, Polyacetale, Polyester, Celluloseester. **U. GRIGO ; K. KIRCHNER ; P.R. MÜLLER.** Kunststoff-Handbuch. Carl Hanser Verlag, 1992, vol. 3/1, 117-299
- High Polymers. **VON J.H. SAUNDERS ; K.C. FRISCH.** Polyurethane. Verlag Interscience Publishers, 1962, vol. XVI
- **VON R. GÄCHTER ; H. MÜLLER.** dem Taschenbuch für Kunststoff- Additive. Hanser Verlag, 1990